# EUROPÄISCHE PATENTSCHRIFT

(11) **EP 1 029 421 B1**
(45) Veröffentlichungstag und Bekanntmachung des Hinweises auf die Patenterteilung: **19.09.2001**
(21) Anmeldenummer: 97910189.6
(22) Anmeldetag: 07.11.1997
(51) Int. Cl.: H04Q 7/32, G07F 7/00

(54) **IDENTIFIZIERUNGSKARTE UND IDENTIFIZIERUNGSVERFAHREN**
IDENTIFICATION CARD AND IDENTIFICATION PROCEDURE
CARTE D'IDENTIFICATION ET PROCEDE D'IDENTIFICATION

(43) Veröffentlichungstag der Anmeldung: 23.08.2000
(73) Patentinhaber: Swisscom Mobile AG, 3050 Bern (CH)
(72) Erfinder: RITTER, Rudolf, CH-3052 Zollikofen (CH); HEUTSCHI, Walter, CH-3303 Jegensdorf (CH)
(74) Vertreter: BOVARD AG - Patentanwälte
(86) Internationale Anmeldenummer: CH9700425
(87) Internationale Veröffentlichungsnummer: WO9925140

(56) Entgegenhaltungen:
- EP-A- 0 689 368
- EP-A- 0 786 915
- WO-A-94/30023
- WO-A-96/38814
- DE-A- 4 118 993
- YAMAGUCHI, OTA, ITO, OHASHI, WATANABE: "Inter-system mobility and service management in GSM/PDC roaming." GLOBECOM 97. IEEE GLOBAL TELECOMMUNICATIONS CONFERENCE. , Nr. 2, 3. - 8.November 1997, NEW YORK, NY, USA, Seiten 694-698, XP002072594
- LANTTO J: "ROAMING BETWEEN CELLULAR STANDARDS" ISS '95. WORLD TELECOMMUNICATIONS CONGRESS. (INTERNATIONAL SWITCHIN SYMPOSIUM), ADVANCED SWITCHING TECHNOLOGIES FOR UNIVERSAL TELECOMMUNICATIONS AT THE BEGINNING OF THE 21ST. CENTURY BERLIN, APR. 23 - 28, 1995, Bd. VOL. 1, Nr. SYMP. 15, 23.April 1995, VERBAND DEUTSCHER ELEKTROTECHNIKER (VDE) ET AL, Seiten 241-245, XP000495572
- MAZZIOTTO G: "THE SUBSCRIBER IDENTITY MODULE FOR THE EUROPEAN DIGITAL CELLULAR SYSTEM GSM AND OTHER MOBILE COMMUNICATION SYSTEMS" PROCEEDINGS OF THE INTERNATIONAL SWITCHING SYMPOSIUM, YOKOHAMA, OCT. 25 - 30, 1992, Bd. VOL. 1, Nr. SYMP. 14, 25.Oktober 1992, INSTITUTE OF ELECTRONICS;INFORMATION AND COMMUNICATION ENGINEERS, Seiten 113-116, XP000337627

## Beschreibung

Die vorliegende Erfindung betrifft eine Identifizierungskarte und ein Identifizierungsverfahren. Die Erfindung betrifft insbesondere, aber nicht ausschliesslich, eine Chipkarte, um Teilnehmer in einem EDV-System oder in einem Telekommunikationssystem zu identifizieren.

Zahlreiche Systeme verlangen eine Identifizierung von den Benutzern (hier Teilnehmer genannt), um beispielsweise auf geschützte Daten zuzugreifen, Dienste oder Produkte zu bestellen, Transaktionen durchzuführen oder um Zugriff zu geschützten Zonen zu bekommen. Als Beispiel für ein solches System können Computernetze, Mobilfunknetze, Pay-TV-Systeme, Zugriffkontrollvorrichtungen, POS-Geräte, Datenbanken usw., erwähnt werden.

Ein bekanntes Verfahren um Teilnehmer zu identifizieren verwendet eine öffentliche alphanumerische Identifizierung und ein geheimes Passwort, die von jedem Teilnehmer verlangt werden. Dieses oft benutzte Verfahren ist langsam und mühsam für den Teilnehmer, der manuell viele Zeichen eintippen muss, um sich zu identifizieren. Ausserdem bietet dieses Verfahren keine hohe Sicherheit, da Passwörter bekanntlich beobachtet oder herausgefunden werden können.

Ein sichereres bekanntes Verfahren verlangt von den Benutzern, dass sie ein schwer zu kopierendes Objekt, zum Beispiel einen Schlüssel oder eine Chipkarte, vorweisen, um sich zu identifizieren. Ein Objekt ist nämlich schwieriger zu stehlen als ein Passwort, und sein Verschwinden wird meist schnell entdeckt, so dass der Zugriff auf das System sofort gesperrt werden kann. Oft wird zusätzlich zum Schlüssel oder zur Chipkarte noch ein Passwort verlangt.

Eine Identifizierungs-Chipkarte enthält meistens Identifizierungsparameter, die meistens während der Personalisierung der Chipkarte in einem geschützten Speichergebiet der Chipkarte geschrieben werden. Die Personalisierung der Karte erfolgt meistens beim Dienstanbieter, zum Beispiel in einer Bankfiliale im Falle einer Bankkarte. Es ist daher im allgemeinen nicht möglich, die Identifizierungsparameter zu ergänzen oder zu ändern, ohne die Karte zu ersetzen oder mindestens ohne die Karte zum Dienstanbieter zu bringen.

Da die Anzahl von Systemen, die eine Identifizierung der Teilnehmer voraussetzen, ständig wächst, werden die Teilnehmer gezwungen, immer mehr Identifizierungskarten zu besitzen, um sich zum Beispiel bei Bankautomaten, bei Zugriffskontrollvorrichtungen oder bei verschiedenen Telekommunikationssystemen zu identifizieren. Die meisten Karten verlangen ausserdem ein unterschiedliches Passwort vom Benutzer. Dieses Identifizierungsverfahren ist daher unpraktisch und verlangt von den Benutzern, dass sie sich an viele verschiedene Passwörter erinnern.

In der Patentanmeldung WO 96/38814 wird eine Chipkarte mit einer kontaktbehafteten und einer kontaktlosen Schnittstelle vorgeschlagen, welche für die Kopplung über diese verschiedenen Schnittstellen verschiedene Speicherbereiche verfügt, so dass die Karte verschiedene Funktionen ausführen kann, beispielsweise die Funktion einer Telefonwertkarte und die Funktion eines Fahrscheins.

In der Patentanmeldung EP 786 915 A2 wird eine SIM-Karte (Subscriber Identification Module) vorgeschlagen, in welcher identische Identifikationsnummern mehrmals gespeichert werden, um einen betreffenden Teilnehmer in mehreren Mobilnetzen zu identifizieren.

In der Patentanmeldung WO 94/30023 wird ein Verfahren beschrieben, um über eine Luftschnittstelle Daten und/oder Applikationen auf eine SIM-Karte zu laden, so dass die Karte mit zusätzlichen Diensten versehen und als Multi-Service-Karte eingesetzt werden kann.

Eine Aufgabe der vorliegenden Erfindung ist es, verbesserte Identifizierungskarten, Identifizierungsverfahren und Identifizierungssysteme vorzuschlagen.

Gemäss der vorliegenden Erfindung werden diese Ziele insbesondere durch die Elemente des kennzeichnenden Teils der unabhängigen Ansprüche erreicht. Weitere vorteilhafte Ausführungsformen gehen ausserdem aus den abhängigen Ansprüchen und der Beschreibung hervor.

Insbesondere werden diese Ziele durch eine SIM-Chipkarte (Subscriber Identity Module) erreicht, zum Beispiel mittels einer SIM-Chipkarte, wie definiert in der technischen Spezifikation GSM 11.11 oder GSM 11.14, die seit 1995 bzw. 1996 beim Sekretariat des European Telecommunications Standards Institute, F-06921 Sophia Antipolis, erhältlich ist.

SIM-Karten werden in den Mobiltelefon-Netzen, wie beispielsweise im GSM-Netz (Global System for Mobile Communication), benutzt, um die Identität der Abonnenten zu speichern. Es handelt sich um eine wegnehmbare Chipkarte, so dass der Benutzer die für ihn bestimmten Anrufe auf dem Mobilgerät seiner Wahl empfangen kann, indem er die SIM-Karte von einem auf ein anderes Gerät überträgt. Die Mobilstationen (MS, Mobile Stations), wie zum Beispiel GSM-Zellulartelefone, werden folglich aus zwei Elementen gebildet, dem mobilen Gerät und der SIM-Chipkarte.

Die SIM-Karten existieren heute in zwei genormten Formaten. Das "Full Size"-Format entspricht der Grösse einer Kreditkarte, während das "Plug-ln"-Format, welches speziell an die miniaturisierten tragbaren Telefone angepasst ist, ungefähr 25 mm x 10 mm gross ist. Die Funktionalitäten der Karten mit diesen zwei Formaten sind identisch.

Die SIM-Karten enthalten im allgemeinen Datenverarbeitungsmittel, meistens einen in einem Chip integrierten Mikrokontroller. Dieser Mikrokontroller enthält einen Speicherbereich, meistens ein EEPROM, welcher das Abspeichern von Programmen und/oder Dateien erlaubt, sowie Verarbeitungsmittel, welche in der Lage sind, verschiedene Algorithmen auszuführen, insbesondere Algorithmen, welche die Durchführung der Teilnehmeridentifikation und der Kommunikationsverschlüsselung erlauben.

Die Verarbeitungsmittel haben Zugriff auf Programme und Dateien im Speicherbereich der Karte. Diese Dateien umfassen insbesondere eine Teilnehmeridentifizierung IMSI (International Mobile Subscriber Identity), die in einer Datei EFIMSI auf der Karte gespeichert ist, und die den Teilnehmer in einem GSM-Mobilfunknetz identifiziert.

Gemäss der Erfindung umfasst die SIM-Karte eine oder mehrere zusätzliche neue Dateien im Speicherbereich des Mikrokontrollers, die Identifizierungsparameter enthalten, um Teilnehmer an anderen Systemen in diesen anderen Systemen zu identifizieren.

Mit diesen zusätzlichen Identifizierungsparametern kann die SIM-Chipkarte nicht nur dazu benutzt werden, um den Teilnehmer in einem Mobilfunknetz zu identifizieren, sondern auch um ihn in verschiedenen anderen Systemen zu identifizieren.

Gemäss einem anderen Aspekt der Erfindung werden diese zusätzlichen Identifizierungsparameter von einem mit dem SIM-Server verbundenen SIM-Server an die SIM-Karten der Teilnehmer übermittelt.

Es ist dadurch möglich, Identifizierungsparameter für neue Systeme jederzeit hinzuzufügen, um die Anwendungsmöglichkeiten von schon verteilten SIM-Karten zu erweitern. Ebenfalls können zu jeder Zeit die Identifizierungsparameter für irgendwelche Systeme und in irgendwelchen schon verteilten SIM-Karten aus der Ferne ergänzt oder geändert werden.

Die vorliegende Erfindung wird mit Hilfe der Beschreibung besser verständlich, welche als Beispiel angeführt ist und durch die Figuren dargestellt wird, wobei:

Die Figur 1 ein Blockschema eines erfindungsgemässen Systems zeigt.

Die Figuren 2a und 2b zeigen zwei verschiedene Parametertabellen in der SIM-Karte, gemäss zwei verschiedenen Organisationsvarianten.

Die Figur 3 zeigt ein Blockschema einer Variante der Erfindung, in welcher das Endgerät des Teilnehmers ein tragbarer Computer ist, der mit verschiedenen Systemen verbunden werden kann.

Die Figur 4 zeigt ein Blockschema einer anderen Variante der Erfindung, in welcher das Endgerät des Teilnehmers ein Mobilfunktelefon ist, das mit verschiedenen Systemen verbunden werden kann.

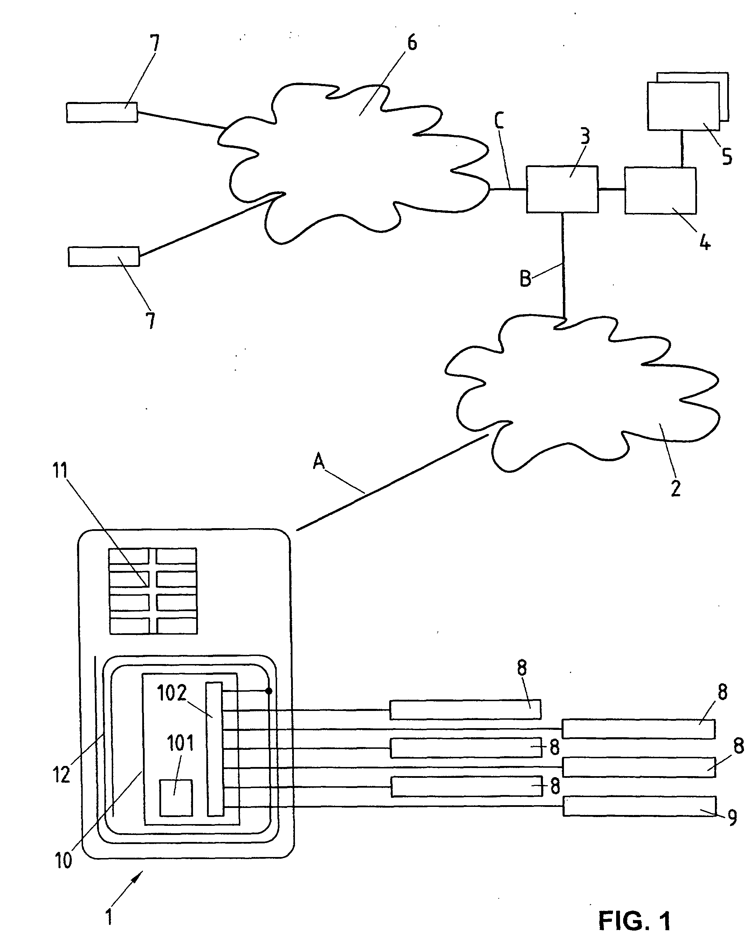

Das in Figur 1 dargestellte System umfasst eine SIM-Chipkarte 1, wie sie jetzt schon unter anderem in GSM-, DECT-, DCS-, oder PCS-Mobilgeräten eingesetzt wird, oder auch in zukünftigen Fixnetzen mit Teilnehmeridentifizierung durch Chipkarten. Die SIM-Karte kann entweder eine Full-size Karte oder eine Plug-in-Karte sein ; sie kann durch ein Kontaktgebiet 11 auf der Oberfläche der Karte mit einem nicht dargestellten Endgerät verbunden werden, zum Beispiel mit einem Mobilfunktelefon, einem PC, einem Laptop oder einem Palmtop. Die Karte enthält Datenverarbeitungsmittel 10, zum Beispiel einen in einem Chip integrierten Mikrokontroller.

Ein Speicherbereich, vorzugsweise eine EEPROM, ist im Mikrokontroller 10 enthalten oder mit dem Mikrokontroller verbunden. Der Speicherbereich enthält Programme und Dateien, die in einer hierarchischen Verzeichnisstruktur organisiert sind. Die Dateien umfassen unter anderem Elementary Files EF, wie in den oben erwähnten technischen Spezifikationen GSM 11.11 oder GSM 11.14 definiert.

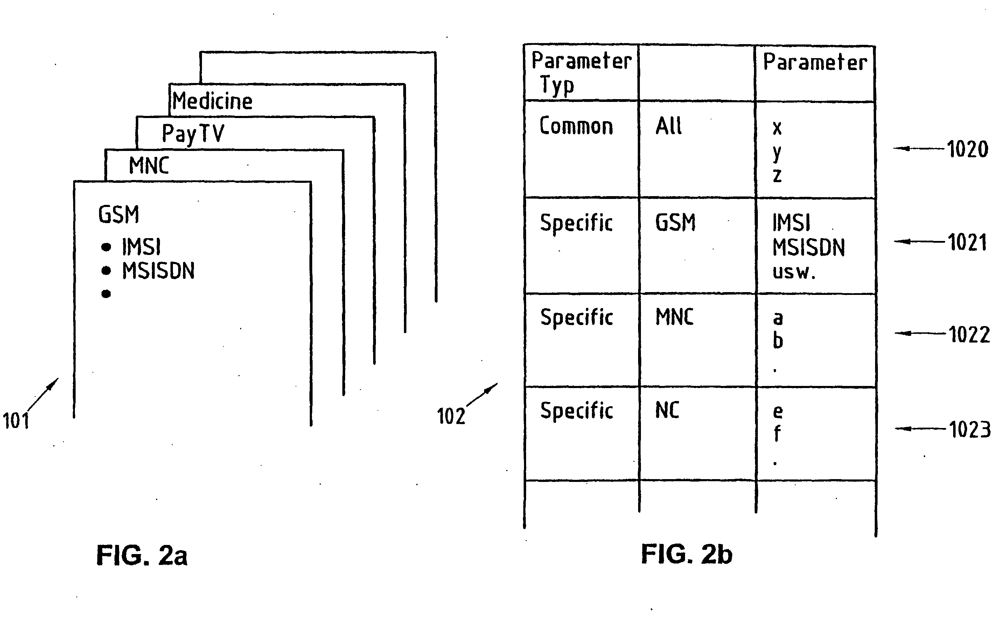

Erfindungsgemäss enthält die SIM-Karte 1 ausserdem eine oder mehrere neue Tabellen 101 oder 102 im Speicherbereich des Mikrokontrollers 10. Diese zusätzlichen Tabellen enthalten Identifizierungsparameter, um den Teilnehmer in anderen Systemen zu identifizieren. Die Tabellen, die später in Bezug auf die Figur 2 näher beschrieben werden, können in einem oder mehreren Elementary Files EF im Speichergebiet der Chipkarte 1 enthalten sein. Die anderen Systeme können beispielsweise ein anderes Mobil-, Fix- oder WWW-Netz, ein Computernetz (NC, Network Computer) wie zum Beispiel ein Inter-, Intra- oder Extranet, ein Pay-TV oder Pay-Radiosystem, ein Verkehrsleitsystem (GPS, TPS), eine Bank, ein POS-Gerät, usw. sein. Je nach Identifizierungsparameter in den Tabellen kann sich dadurch der Teilnehmer in allen diesen Systemen mit einer einzigen Karte 1 identifizieren.

Der Speicherbereich des Mikrokontrollers 10 umfasst ausserdem eine oder mehrere neue EXE-Dateien (Programm), um diese zusätzlichen Identifizierungsparameter zu verwalten. Vorzugsweise enthält der Speicherbereich neue Softwaremodule, um auf die Identifizierungsparameter in den empfangenen SMS-Kurzmeldungen zuzugreifen und um diese empfangenen Identifizierungsparameter zu speichern.

Vorzugsweise enthält die SIM-Karte noch eine induktive Spule 12, um kontaktlos mit externen Geräten kommunizieren zu können. Der SIM-Mikrokontroller wird in diesem Fall vorzugsweise mit einem nicht dargestellten, anderen Elektronikmodul ergänzt, welches mit der Spule 12 verbunden und für die kontaktlose Kommunikation mit einer externen Vorrichtung zuständig ist.

Die SIM-Karte enthält ausserdem vorzugsweise bekannte Mittel, um SMS-Kurzmeldungen zu senden und zu empfangen, sowie bekannte Filtermittel, um spezielle Kurzmeldungen zu erkennen und zwischenzuspeichern, vorzugsweise gemäss dem SICAP-Verfahren, das unter anderem im Patent EP 0689 368 B1 beschrieben ist. Verschlüsselungs- und Signierungsmittel sind ausserdem vorzugsweise vorhanden, um empfangene SMS-Meldungen zu entschlüsseln und um gesandte SMS-Meldungen zu verschlüsseln und zu signieren. Als Verschlüsselungsverfahren kann beispielsweise das TTP-Verfahren eingesetzt werden, oder auch Entschlüsselungsmittel, die nach einem Point-to-Point-Verfahren arbeiten.

Die SIM-Karte 1 ist mit einem Mobilfunknetz, beispielsweise mit einem GSM-Netz, verbunden, wenn sie in einem nicht dargestellten Mobilgerät steckt. Ein SIM-Server 3 zur Verwaltung von Kurzmeldungen (SSC, Short Message Service Center) ist ebenfalls an das Netz 2 angeschlossen ; der SIM-Server 3 ist so ausgestattet, dass er mit der SIM-Karte 1 mittels speziellen SMS-Kurzmeldungen über das Mobilfunknetz kommunizieren kann. Die bekannten Filtermittel in dem SIM-Server und in den SIM-Karten erlauben es, spezielle Dienste, wie den Austausch von Dateien, Instruktionen und Programmen zwischen dem SIM-Server und einer SIM-Karte, auszuführen.

Ein TTP-Server 4 ist ebenfalls am SIM-Server 3 angeschlossen, um mindestens gewisse spezielle SMS-Kurzmeldungen zu verschlüsseln und dadurch zu sichern, dass die Vertraulichkeit, Authentizität der Identität, Authentizität der Information, Integrität und Nichtabstreitbarkeit des Ursprungs gewährleistet sind. Wie schon erwähnt, kann auch ein Point-to-Point Verschlüsselungs- und Signierungs-Verfahren eingesetzt werden.

Verschiedene Dienstanbieter 7 sind durch das Mobilfunknetz 2 oder durch ein spezielles Netz 6 mit dem SIM-Server 3 verbunden. Das spezielle Netz 6 kann beispielsweise ein Inter-, Intra- oder Extra-Netz oder auch ein X25-Netz sein. Die Dienstanbieter verwalten die erwähnten anderen Systeme 8.

Um sich bei einem Dienstanbieter 7 zu identifizieren, und um das von diesem Anbieter angebotene System zu benutzen, muss sich der Teilnehmer vorher mit den in seiner Chipkarte vorhandenen IdentifizierungsParametern identifizieren, beispielsweise mit einem in der Karte 1 gespeicherten Passwort. Erfindungsgemäss werden Identifizierungsparameter für verschiedene Systeme im Speicherbereich einer einzigen SIM-Karte 1 gespeichert. Verschiedene Systeme können durch eine Art virtueller Bus in der SIM-Karte 1 auf die benötigten Identifizierungsparameter zugreifen. Der Dienstanbieter setzt dafür die notwendigen Parameter in einer Tabelle 5, an die der SIM-Server 3 zugreifen kann. Die Parameter-Tabelle ist vorzugsweise im SIM-Server 3 gespeichert; sie enthält die Parameter für jeden Teilnehmer und für jedes abonnierte System 8.

Der SIM-Server 3 führt das Datenmanagement zwischen dem Dienstanbieter 7, der Tabelle 5 und den SIMs 1. Die Kommunikation erfolgt verschlüsselt. Via SIM-Server 3 hat jeder Dienstanbieter 7 Zugang zu einem Speicherbereich 101, 102 der an das System 8 dieses Dienstanbieters abonnierten SIM-Karten 1: in diesem Speicherbereich kann er die für die Benutzung seines Systems notwendigen Parameter setzen. Diese Parameter werden durch den SIM-Server 3 und mit speziellen SMS-Kurzmeldungen übermittelt.

Der SIM-Server 3 erstellt und führt die Parameter-Tabelle 5. Die Parameter-Tabelle 5 enthält eine Kopie von allen an alle Teilnehmer übermittelten Identifizierungsparametern.

Die Figur 2 zeigt zwei verschiedene Möglichkeiten, um Identifizierungsparameter im Speicherbereich der SIM-Karte 1 zu speichern. Diese Parameter können beispielsweise in verschiedenen Tabellen 101 gespeichert werden, wie schematisch auf der Figur 2a dargestellt. Eine Tabelle entspricht dann jedem Dienst oder System, welche der Teilnehmer abonniert hat. Eine Tabelle kann dann beispielsweise die Parameter enthalten, die erlauben, die Karte als Identifizierungs-SIM-Karte in einem GSM-Netz zu benutzen, während eine zweite Tabelle die Identifizierungsparameter für ein Computernetz und eine dritte Tabelle, die Identifizierungsparameter für ein Pay-TV-System enthält, usw. Diese verschiedenen Tabellen können in einer einzigen EF-Datei gespeichert werden, oder vorzugsweise jede Tabelle in einer anderen Datei. In diesem Fall muss, jedesmal wenn der Teilnehmer ein neues System abonniert, eine neue Datei hergestellt werden.

Es ist jedoch auch möglich, Identifizierungsparameter für verschiedene Systeme in einer einzigen Tabelle 102 zu speichern, wie schematisch auf der Figur 2b dargestellt. Diese Tabelle 102 enthält dann einen ersten Bereich 1020, der die für jedes System gemeinsamen Parameter x, y, z angibt - beispielsweise den Namen des Teilnehmers. Andere Bereiche 1021, 1022, 1023, usw, enthalten dagegen die für jedes abonnierte System spezifischen Parameter a, b, ..., f... Beispielsweise gibt der Bereich 1021 die Identifizierungsparameter IMSI (International Mobile Subscriber Identity) und MSISDN (Mobile Station Identity Number) an, mit denen der Teilnehmer in einem GSM-Netz identifiziert wird, und der Bereich 1022 enthält Parameter, um ihn in einem MNC-Netz zu identifizieren usw.

Die auf diese Weise parametrisierte SIM-Karte 1 kann in verschiedenen Systemen benutzt werden, indem sie beispielsweise direkt in einem Kartenleser dieses Systems eingesetzt wird - beispielsweise in einem Bankautomaten im Falle eines Banksystems. Der Kartenleser kann in diesem Fall auf die benötigten Identifizierungsparameter durch das Kontaktgebiet 11 auf der Karte zugreifen. Der Kartenleser kann zum Beispiel einen direkten Zugriff auf den entsprechenden Speicherbereich 1022, 1023, usw. haben.

In einer bevorzugten Variante können jedoch die Systeme 8 auf die Identifizierungsparameter a, b, .. nur durch die Datenverarbeitungsmittel 10 in der Karte zugreifen. Vorzugsweise wird in diesem Fall jedem System ein Zugreifen auf die Parameter gewährleistet, als ob die einzelnen Systeme isoliert wären (virtueller Bus).

Gewisse Systeme verlangen, dass die Identifizierungsparameter gemäss einem vordefinierten Protokoll eingeführt werden ; beispielsweise stellt der Kartenleser häufig bei einer Teilnehmeridentifikation eine Anzahl von Abfragen an die Chipkarte, die die Karte entsprechend mit den jeweiligen Identifizierungsparametern beantworten muss. Dieses Protokoll kann vom Prozessor auf der Karte ausgeführt werden, der dafür mit einem spezifischen Programm im Speichergebiet der Karte speziell programmiert wird.

Wenn ein System von der Karte verlangt, dass sie ein systemspezifisches, ansonsten nicht verfügbares Identifizierungsprotokoll ausführt, ist es erfindungsgemäss möglich, dass die für das Ausführen dieses Protokolls benötigte EXE-Datei auf die Karte übermittelt wird. Vorzugsweise wird dieses Programm mittels speziellen SMS-Kurzmeldungen durch das Netz 2 übermittelt, auf dieselbe Art wie normale Identifizierungsparameter. Sobald die SIM-Karte erkannt hat, dass sie sich in einem Kartenleser befindet, der ein solches Identifizierungsprotokoll verlangt, führt sie dann sofort das entsprechende Programm aus. Die SIM-Karte verhält sich dann wie eine normale Identifizierungskarte dieses Systems. Vorteilhaft wird das Protokollprogramm mit der JAVA-Sprache programmiert.

Die Identifizierungsparameter können beispielsweise eine öffentliche Identifizierung (Name, Land, ID, usw..) und ein geheimes Passwort des Teilnehmers enthalten. Es ist aber auch möglich, je nach abonniertem System, jegliche andere Parameter zu speichern. Zum Beispiel können auch biometrische Parameter gespeichert werden, wie zum Beispiel Stimmenparameter, Gesichtszüge oder Augenmuster des Teilnehmers. Die Parametertabellen 101, 102 können aber auch alle anderen, für das Identifizierunsprotokoll benutzten Parameter oder Daten enthalten.

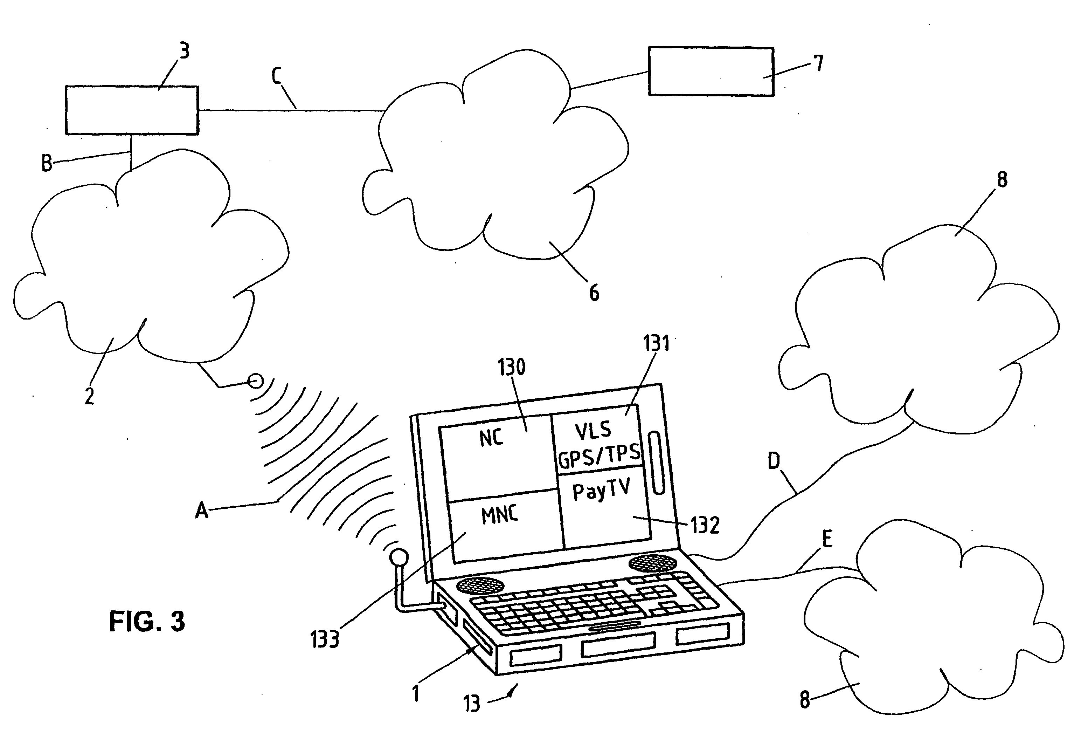

Die Figur 3 stellt ein Blockschema einer Variante der Erfindung dar, in welcher das Endgerät des Teilnehmers ein Mobilcomputer 13 ist, der mit verschiedenen Systemen 8 verbunden werden kann. Der Mobilcomputer 13 umfasst einen Chipkartenleser, um insbesondere SIM-Chipkarten 1 lesen zu können. Verschiedene Anwendungen im Computer 13 erlauben es, ihn mit verschiedenen Systemen zu verbinden, zum Beispiel mit einem Computernetz, mit einem Inter-, Intra- oder Extranet oder mit einem Pay-TV-Netz usw. Diese Anwendungsprogramme, mit denen der Computer 13 an diese verschiedenen externen Systeme angeschlossen werden kann, können alle von diesem Computer ausgeführt werden und in einem Multi-tasking-Betriebssystem beispielsweise gleichzeitig in mehreren Fenstern 130, 131, 132, 133 auf dem Bildschirm des Mobilcomputers dargestellt werden. Der Anschluss an diese verschiedenen Systeme erfolgt mit geeigneten Anschlussmitteln D, E, beispielsweise mit Hilfe eines Modems und/oder einer Netzwerkkarte.

Der Mobilcomputer 13 umfasst ausserdem Mittel, um ihn mit einem Mobilfunknetz 2 zu verbinden, wobei diese Mittel im Computer 13 integriert werden oder sich auch ausserhalb dieses Computers befinden können. Auf diese Weise können die Dienstanbieter 7 der verschiedenen Systeme 8 Identifizierungsparameter und ldentifizierungsprotokollprogramme in den SIM-Karten 1 ihrer Abonnenten durch ein Netz 6 und einen SIM-Server 3 übermitteln, wie oben beschrieben. Diese Identifizierungsparameter werden ausserdem in die Tabellen 5 kopiert, auf die der SIM-Server 3 zugreifen kann. Vorzugsweise werden, wie oben beschrieben, die verschiedenen Meldungen A, B, C zwischen den Dienstanbietern, dem SIM-Server 3 und dem Endgerät 1 mittels TTP verschlüsselt und signiert.

Der mit dem Mobilcomputer 13 ausgerüstete Teilnehmer kann sich mit verschiedenen Anwendungen an die verschiedenen Systeme 8 anschliessen, wobei der Anschluss das Lesen von entsprechenden Identifizierungsparametern auf der SIM-Karte 1 erfordert, sowie gegebenenfalls die Ausführung von einem auf der Karte 1 gespeicherten Identifizierungsprotokollprogramm, wie oben beschrieben.

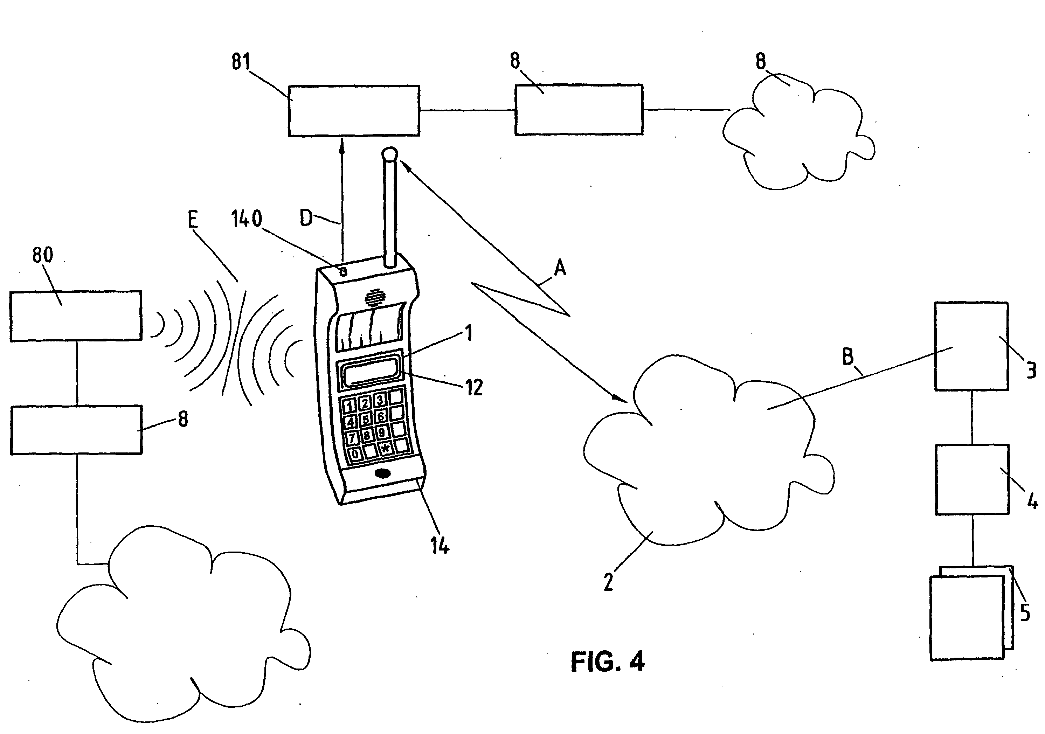

Die Figur 4 stellt ein Blockschema einer Variante der Erfindung dar, in welcher das Endgerät des Teilnehmers ein Mobilfunktelefon 14 ist, das durch verschiedene Schnittstellen 12, 140 direkt mit verschiedenen Systemen 8 verbunden werden kann. Diese zusätzlichen Schnittstellen umfassen beispielsweise eine induktive Spule 12 in der SIM-Karte 1, mit der die SIM-Karte 1 kontaktlos mit einem externen System 8 kommunizieren kann. Zu diesem Zweck ist das System 8 ebenfalls an einen induktiven Sender-Empfänger 80 angeschlossen. Ebenfalls kann das Mobilgerät 14 durch einen optionalen infraroten Sender-Empfänger 140 kontaktlos mit einem an einem System 8 angeschlossenen Sender-Empfänger 81 kommunizieren. Andere Mittel, um das Mobilfunktelefon 14 mit anderen Systemen zu verbinden, können im Rahmen der Erfindung auch eingesetzt werden. Zum Beispiel kann das Mobilfunktelefon durch das normale Mobilfunknetz 2 oder durch einen Stecker an externe Systeme angeschlossen werden.

Die durch ein nicht dargestelltes Netz mit dem SIM-Server 3 verbundenen Dienstanbieter 7 der verschiedenen Systeme 8 können, wie oben beschrieben, Identifizierungsparameter und eventuell Identifizierungsprotokollprogramme durch den SIM-Server 3 in den SIM-Karten ihrer Abonnenten nachladen. Diese Identifizierungsparameter werden ausserdem in die Tabellen 5 kopiert, auf die der Server 3 zugreifen kann. Vorzugsweise werden die verschiedenen Meldungen A, B, C zwischen den Dienstanbietern, dem SIM-Server 3 und den Mobilgeräten 14 mit TTP verschlüsselt.

Mit den im Mobilgerät 14 gespeicherten Identifizierunsparametern kann sich der Teilnehmer bei den verschiedenen Systemen 8 identifizieren, um diese Systeme zu benutzen.

Vorteilhaft erweist sich bei dieser Erfindung, dass die verschiedenen Dienstanbieter 7 ihre angebotenen Dienste nach Bedarf steuern können. Da zu den SIM-Karten 1 nur eine Schnittstelle bezüglich der Verwaltung von Parametern besteht, können ausserdem Mechanismen für die Verrechnungsprozesse aller vernetzten Systeme leicht aufgebaut werden.

In einer Ausführungsvariante umfasst die Identifizierungskarte 1 mehrere Kontaktgebiete um sie mit verschiedenen Systemen 8 zu verbinden.

## Patentansprüche

1. Identifizierungskarte (1) für einen Teilnehmer eines Mobilfunknetzes (2), die ein Kontaktgebiet (11) umfasst, um sie mit einem Mobilgerät (13, 14) zu verbinden, und die elektronische Speichermittel (10) umfasst, die Identifizierungsparameter des Teilnehmers für das genannte Mobilfunknetz enthalten, **dadurch gekennzeichnet**,
dass ein oder mehrere andere Identifizierungsparameter zur Identifizierung des Teilnehmers in mindestens einem anderen System in den genannten Speichermitteln gespeichert sind, wobei mindestens ein genanntes anderes System kein Mobilfunknetz ist, und wobei diese anderen Identifizierungsparameter jeweils Parameter umfassen, die spezifisch für das betreffende andere System sind, und
dass ein oder mehrere systemspezifische Identifizierungsprotokollprogramme in den genannten Speichermitteln (10) gespeichert sind, welche jeweils dem betreffenden anderen System die betreffenden anderen Identifizierungsparameter gemäss einem systemspezifischen Identifizierungsprotokoll einführen.

2. Identifizierungskarte gemäss dem vorhergehenden Anspruch, **dadurch gekennzeichnet, dass** die genannten anderen Identifizierungsparameter in einer einzigen Tabelle (102) oder in verschiedenen Tabellen (101) in den genannten Speichermitteln (10) gespeichert sind.

3. Identifizierungskarte gemäss Anspruch 1, **dadurch gekennzeichnet, dass** die genannten anderen Identifizierungsparameter durch das genannte Kontaktgebiet (11) zugreifbar sind, und/oder dass die Identifizierungskarte mehrere Kontaktgebiete zur Verbindung mit verschiedenen Systemen (8) umfasst, und/oder dass die Identifizierungskarte ausserdem eine induktive Spule (12) enthält, durch welche die genannten anderen Identifizierungsparameter zugreifbar sind.

4. Identifizierungskarte gemäss einem der vorhergehenden Ansprüche, **dadurch gekennzeichnet, dass** sie so eingerichtet ist, dass sie durch SMS-Meldungen mit einem SIM-Server (3) im genannten Mobilfunknetz (2) kommunizieren kann, und dass sie Mittel zum Zugreifen auf die genannten Identifizierungsparameter in den genannten SMS-Meldungen umfasst, sowie Mittel zur Speicherung dieser Identifizierungsparameter in den genannten Speichermitteln (10).

5. Identifizierungskarte gemäss dem vorhergehenden Anspruch, **dadurch gekennzeichnet, dass** sie ausserdem Entschlüsselungsmittel für die genannten SMS-Meldungen umfasst.

6. Identifizierungskarte gemäss einem der vorhergehenden Ansprüche, **dadurch gekennzeichnet, dass** mindestens ein benanntes anderes System ein Computernetz ist und dass die genannten anderen Identifizierungsparameter eine Identifizierung in diesem Computernetz erlauben, und/oder dass mindestens ein benanntes anderes System ein Pay-TV-System ist und dass die genannten anderen Identifizierungsparameter eine Identifizierung in diesem Pay-TV-System erlauben, und/oder dass mindestens ein benanntes anderes System ein Fixnetz ist und dass die genannten anderen Identifizierungsparameter eine Identifizierung in diesem Fixnetz erlauben, und/oder dass die genannten anderen Identifizierungsparameter eine Identifizierung mit einem Finanzinstitut erlauben, und/oder dass mindestens ein benanntes anderes System ein Verkehrsleitsystem ist und dass die genannten anderen Identifizierungsparameter eine Identifizierung mit diesem Verkehrsleitsystem erlauben.

7. Identifizierungskarte gemäss einem der vorhergehenden Ansprüche, **dadurch gekennzeichnet, dass** sie eine GSM-SIM-Karte ist

8. Identifizierungskarte gemäss einem der vorhergehenden Ansprüche, **dadurch gekennzeichnet, dass** die genannten ldentifizierungsparameter auch biometrische Identifizierungsparameter enthalten.

9. Mobilfunksystem, umfassend: einen SIM-Server (3), eine Vielzahl von Mobilgeräten (13, 14), die mit dem genannten SIM-Server durch ein Mobilfunknetz (2) verbindbar sind, wobei mindestens gewisse Mobilgeräte eine Identifizierungskarte (1) enthalten, wobei die Identifizierungskarten ein Kontaktgebiet umfassen, um sie mit dem entsprechenden Mobilgerät (13, 14) zu verbinden, sowie elektronische Speichermittel (10), in denen Identifizierungsparameter von Teilnehmern des genannten Mobilfunknetzes gespeichert sind,
**dadurch gekennzeichnet, dass** ein oder mehrere andere Identifizierungsparameter zur Identifizierung des Teilnehmers in mindestens einem anderen System in den genannten Speichermitteln gespeichert sind, wobei mindestens ein benanntes anderes System kein Mobilfunknetz ist, und wobei diese anderen Identifizierungsparameter jeweils Parameter umfassen, die spezifisch für das betreffende andere System sind, und
dass ein oder mehrere systemspezifische Identifizierungsprotokollprogramme in den genannten Speichermitteln (10) gespeichert sind, welche jeweils dem betreffenden anderen System die betreffenden anderen Identifizierungsparameter gemäss einem systemspezifischen Identifizierungsprotokoll einführen.

10. Mobilfunksystem gemäss dem vorhergehenden Anspruch, **dadurch gekennzeichnet, dass** die genannten anderen Identifizierungsparameter in einer oder mehreren Tabellen (5) gespeichert sind, die für den genannten SIM-Server (3) zugreifbar sind, und von den genannten Tabellen in die genannten Speichermittel (10) übermittelbar sind.

11. Mobilfunksystem gemäss dem vorhergehenden Anspruch, **dadurch gekennzeichnet, dass** die genannten anderen Parameter in einer einzigen Tabelle (102) oder in verschiedenen Tabellen (101) in den genannten Speichermitteln (10) gespeichert sind.

12. Mobilfunksystem gemäss dem Anspruch 9, **dadurch gekennzeichnet, dass** die genannten anderen Identifizierungsparameter durch das genannte Kontaktgebiet (11) zugreifbar sind, wenn die Karte in einem mit dem genannten anderen System verbundenen Gerät eingeschoben ist, und/oder dass mindestens gewisse Identifizierungskarten mehrere Kontaktgebiete umfassen, um sie mit verschiedenen Systemen (8) zu verbinden, und/oder dass mindestens gewisse SIM-Karten ausserdem eine induktive Spule (12) enthalten, durch welche die genannten anderen Identifizierungsparameter zugreifbar sind, und/oder dass mindestens gewisse Mobilgeräte eine Infrarotschnittstelle (140) umfassen, um Identifizierungsparameter an externe Systeme (81, 8) zu übermitteln.

13. Mobilfunksystem gemäss dem Anspruch 9, **dadurch gekennzeichnet, dass** die genannte Vielzahl von Mobilgeräten (13, 14) so eingerichtet ist, dass sie durch SMS-Meldungen mit dem genannten SIM-Server kommunizieren kann, und dass die in den genannten SMS-Meldungen gespeicherten Identifizierungsparameter für die Speicherung in den genannten Speichermitteln (10) zugreifbar sind.

14. Mobilfunksystem gemäss einem der Ansprüche 9 bis 13, **dadurch gekennzeichnet, dass** die genannten Identifizierungsparameter biometrische Identifizierungsparameter enthalten.

15. Verfahren, um einen Mobilfunkteilnehmer in anderen Systemen zu identifizieren, durch folgende Schritte gekennzeichnet:
Speicherung von ldentifizierungsparametern und systemspezifischen Identifizierungsprotokollprogrammen in einem Server (3, 7), mit denen der genannte Teilnehmer in dem oder den genannten anderen Systemen (8) identifizierbar ist, wobei mindestens ein genanntes anderes System nicht ein Mobilfunknetz ist, und wobei diese anderen Identifizierungsparameter jeweils Parameter umfassen, die spezifisch für das betreffende andere System sind,
Übermittlung der genannten Identifizierungsparameter und systemspezifischen Identifizierungsprotokollprogrammen aus dem genannten Server auf die Identifizierungskarten (1) der entsprechenden Teilnehmer über ein Mobilfunknetz (2), wobei die genannten Identifizierungskarten (1) durch ein Kontaktgebiet (11) mit einem Mobilgerät (13, 14) verbunden sind und elektronische Speichermittel (10) enthalten, die Identifizierungsparameter von Teilnehmern im genannten Mobilfunknetz enthalten,
Speicherung von den genannten übermittelten Identifizierungsparametern und systemspezifischen Identifizierungsprotokollprogrammen in den genannten Speichermitteln (10) der entsprechenden Teilnehmer, und
Benutzung der genannten Identifizierungskarten als Identifizierungsmittel in den genannten anderen Systemen, wobei das betreffende systemspezifische Identifizierungsprotokollprogramm mindestens gewissen betreffenden anderen Systemen die betreffenden anderen Identifizierungsparameter gemäss einem systemspezifischen Identifizierungsprotokoll einführt.

16. Verfahren gemäss dem vorhergehenden Anspruch, **dadurch gekennzeichnet, dass** die genannten übermittelten Identifizierungsparameter verschlüsselt sind.

17. Verfahren gemäss Anspruch 15, **dadurch gekennzeichnet, dass** auf die genannten anderen Identifizierungsparameter durch das genannte Kontaktgebiet (11) zugegriffen wird, und/oder dass auf die genannten anderen Identifizierungsparameter durch eine induktive Spule (12) in den genannten Identifizierungskarten zugegriffen wird, und/oder dass auf die genannten anderen Identifizierungsparameter durch eine Infrarotschnittstelle (140) in den Mobilgeräten (13, 14) zugegriffen wird.

## Claims

1. Identification card (1) for a subscriber of a mobile radio network (2) which comprises a contact area (11), in order to connect it to a mobile device (13, 14), and which comprises electronic memory means (10) which contain the identification parameters of the subscriber for the said mobile radio network,
**characterised**
**in that** one or more other identification parameters are stored in the said memory means for the identification of the subscriber in at least one other system, at least one said other system not being a mobile radio network, and these other identification parameters comprising in each case parameters that are specific for the respective other system, and
one or more system-dependent identification protocol programs are stored in the said memory means (10), which each introduce to the respective other system the respective other identification parameters according to a system-specific identification protocol.

2. Identification card according to the preceding claim, **characterised in that** the said other identification parameters are stored in a single table (102) or in different tables (101) in the said memory means (10)

3. Identification card according to claim 1, **characterised in that** the said other identification parameters are accessible through the said contact area (11), and/or in that the identification card comprises a plurality of contact areas for connection with different systems (8), and/or in that the identification card further contains an inductive coil (12) through which the said other identification parameters are accessible.

4. Identification card according to one of the preceding claims, **characterised in that** it is so equipped that it can communicate with a SIM server (3) in the said mobile radio network (2) through SMS messages, and in that it comprises means to access the said identification parameters in the said SMS messages as well as means to store these identification parameters in the said memory means (10).

5. Identification card according to the preceding claim, **characterised in that** it further comprises decryption means for the said SMS messages.

6. Identification card according to one of the preceding claims, **characterised in that** at least one said other system is a computer network, and in that the said other identification parameters permit an identification in this computer network, and/or at least one said other system is a pay TV system, and in that the said other identification parameters permit an identification in this pay TV system, and/or at least one said other system is a fixed network, and in that said other identification parameters permit an identification in this fixed network, and/or the said other identification parameters permit an identification at a financial institution, and/or at least one said other system is a traffic routing system, and in that the said other identification parameters permit an identification in this traffic routing system.

7. Identification card according to one of the preceding claims, **characterised in that** it is a GSM-SIM card.

8. Identification card according to one of the preceding claims, **characterised in that** the said identification parameters also contain biometric identification parameters.

9. Mobile radio system comprising: a SIM server (3), a multiplicity of mobile devices (13, 14), which are connectible to said SIM server through a mobile radio network (2), at least certain mobile devices containing an identification card (1), the identification cards containing a contact area in order to connect them to the respective mobile device (13, 14), and electronic memory means (10), in which identification parameters of subscribers to the said mobile radio network are stored,
**characterised in that** one or more other identification parameters are stored in the said memory means for identification of the subscriber in at least one other system, and at least one said other system not being a mobile radio network, and these other identification parameters comprising in each case parameters that are specific for the respective other system, and
one or more system-dependent identification protocol programs are stored in the said memory means (10), which each introduce to the respective other system the respective other identification parameters according to a system-specific identification protocol.

10. Mobile radio system according to the preceding claim, **characterised in that** the said other identification parameters are stored in one or more tables (5), which are accessible to the said SIM server (3), and are transferable into the said memory means (10) from the said tables.

11. Mobile radio system according to the preceding claim, **characterised in that** the said other parameters are stored in the said memory means (10) in a single table (102) or in different tables (101).

12. Mobile radio system according to claim 9, **characterised in that** the said other identification parameters are accessible through the said contact area (11) if the card is inserted in a device connected to said other system, and/or in that at least certain identification cards contain a plurality of contact areas in order to connect them to various systems (8), and/or in that at least certain SIM cards contain in addition an induction coil (12) through which the said other identification parameters are accessible, and/or in that at least certain mobile devices comprise an infrared interface (140) in order to communicate identification parameters to external systems (81, 8).

13. Mobile radio system according to claim 9, **characterised in that** the said multiplicity of mobile devices (13, 14) is equipped in such a way that it can communicate with the said SIM server through SMS messages, and in that the identification parameters stored in the said SMS messages are accessible for storing in the said memory means (10).

14. Mobile radio system according to one of the claims 9 to 13, **characterised in that** the said identification parameters contain biometric identification parameters.

15. Method to identify a mobile radio subscriber in other systems, **characterised by** the following steps:
storing of identification parameters and system-specific identification protocol programs in a server (3, 7), with which the said subscriber is identifiable in the said other system or systems (8), at least one said other system not being a mobile radio network, and these other identification parameters comprising in each case parameters that are specific for the respective other system,
communication of said identification parameters and system-specific identification protocol programs from the said server to the identification cards (1) of the respective subscribers via a mobile radio network (2), the said identification cards (1) being connected through a contact area (11) to a mobile device (13, 14), and the cards having electronic memory means (10), which contain identification parameters of subscribers to the said mobile radio network;
storing of the said communicated identification parameters and system-specific identification protocol programs in the said memory means (10) of the respective subscribers;
use of the said identification cards as identification means in the said other systems, the respective system-specific identification protocol program introducing to at least certain respective other systems the respective other identification parameters according to a system-specific identification protocol.

16. Method according to the preceding claim, **characterised in that** the said communicated identification parameters are encrypted.

17. Method according to claim 15, **characterised in that** the said other identification parameters are accessed through the said contact area (11), and/or in that the said other identification parameters are accessed through an induction coil (12) in the said identification cards, and/or in that the said other identification parameters are accessed through an infrared interface (140) in the mobile devices (13, 14).

## Revendications

1. Carte d'identification (1) destinée à un utilisateur d'un réseau de télécommunications mobiles (2), comportant une zone de contact (11) servant à la relier à un appareil mobile (13, 14) et des moyens de mise en mémoire (10) contenant des paramètres d'identification de l'utilisateur pour le réseau mentionné de téléphonie mobile, **caractérisée**
**en ce qu**'un ou plusieurs autres paramètres d'identification de l'utilisateur dans au moins un autre système sont enregistrés dans les moyens de mise en mémoire mentionnés, au moins un autre système n'étant pas un réseau de téléphonie mobile et ces autres paramètres d'identification comprenant dans chaque cas des paramètres spécifiques de l'autre système considéré,
et en ce qu'un ou plusieurs programmes de protocoles d' identification sont enregistrés dans les moyens de mise en mémoire mentionnés (10) qui introduisent dans chacun des autres systèmes considérés les autres paramètres d'identification correspondants, conformément à un protocole d' identification spécifique du système.

2. Carte d'identification selon la revendication précédente, **caractérisée en ce que** les autres paramètres d'identification mentionnés sont enregistrés dans un seul tableau (102) ou dans différents tableaux (101), dans les moyens de mise en mémoire mentionnés (10).

3. Carte d'identification selon la première revendication, **caractérisée en ce que** les autres paramètres d'identification mentionnés sont accessibles par la zone de contact (11) mentionnée, ou en ce que la carte d'identification possède en outre une bobine d'induction (12) grâce à laquelleles autres paramètres d'identification mentionnés sont accessibles, ou les deux.

4. Carte d'identification selon l'une des revendications précédentes, **caractérisée en ce qu'**elle est réalisée de telle manière qu'elle puisse communiquer avec un serveur SIM dans le réseau de téléphonie mobile (2) mentionné, et qu'elle comprend des moyens d'accès aux paramètres d'identification mentionnés dans les messages SMS mentionnés ainsi que des moyens de mise en mémoire de ces paramètres d'identification dans les moyens de mémoire mentionnés (10).

5. Carte d'identification selon la revendication précédente, **caractérisée en ce qu'**elle comprend en outre des moyens de décryptage pour les messages SMS mentionnés.

6. Carte d'identification selon l'une des revendications précédentes, **caractérisée en ce qu'**au moins un autre système mentionné est un réseau d'ordinateurs et que les autres paramètres d'identification mentionnés permettent l'identification dans ce réseau d'ordinateurs ou bien, ou l'un et l'autre à la fois, en ce qu'au moins un autre système mentionné est un système de télévision payante et que les autres paramètres d'identification mentionnés permettent l'identification dans ce système de télévision payante ou bien, ou l'un et l'autre à la fois, en ce qu'au moins un autre système mentionné est un réseau fixe et que les autres paramètres d'identification mentionnés permettent l'identification dans ce réseau fixe ou bien, ou l'un et l'autre à la fois, en ce que les autres paramètres d'identification mentionnés permettent l'identification avec un institut financier, ou bien, ou l'un et l'autre à la fois, en ce qu'au moins un autre système mentionné est un système de pilotage du trafic et que les autres paramètres d'identification mentionnés permettent l'identification dans ce système de pilotage du trafic.

7. Carte d'identification selon l'une des revendications précédentes, **caractérisée en ce qu'**elle est une carte SIM GSM.

8. Carte d'identification selon l'une des revendications précédentes, **caractérisée en ce que** les paramètres d'identification mentionnés comprennent aussi des paramètres d'identification biométriques.

9. Système de téléphonie mobile comprenant un serveur SIM (3), un grand nombre d'appareils mobiles (13, 14) pouvant être reliés à ce serveur SIM par un réseau de téléphonie mobile (2), au moins certains appareils mobiles comportant une carte d'identification (1), les cartes d'identification présentant une zone de contact qui sert à les relier à l'appareil mobile (13, 14) considéré, ainsi que des moyens électroniques de mise en mémoire (10) dans lesquels sont enregistrés des paramètres d'identification d'abonnés du réseau de téléphonie mobile mentionné,
**caractérisé en ce qu'**un ou plusieurs autres paramètres d'identification servant à identifier l'abonné sont mis en mémoire, au moins dans un autre système, dans les moyens de mise en mémoire mentionnés, au moins un des autres systèmes mentionnés n'étant pas un réseau de téléphonie mobile et ces autres paramètres d'identification comportant dans chaque cas des paramètres spécifiques de l'autre système considéré, et
en ce qu'un ou plusieurs programmes de protocoles d'identification spécifiques du système sont enregistrés dans les moyens de mise en mémoire (10) mentionnés, qui introduisent dans chaque cas, dans l'autre système considéré, les autres paramètres d'identification correspondants, conformément à un protocole d'identification spécifique du système.

10. Système de téléphonie mobile selon la revendication précédente, **caractérisé en ce que** les autres paramètres d'identification mentionnés sont enregistrés dans un ou plusieurs tableaux (5) qui sont accessibles au serveur SIM (3) mentionné et peuvent être transférés des tableaux aux moyens de mise en mémoire (10) mentionnés.

11. Système de téléphonie mobile selon la revendication précédente, **caractérisé en ce que** les autres paramètres mentionnés sont enregistrés dans un seul tableau (102) ou dans différents tableaux (101), dans les moyens de mise en mémoire (10) mentionnés.

12. Système de téléphonie mobile selon la revendication 9, **caractérisé en ce que** les autres paramètres d'identification mentionnés sont accessibles grâce à la zone de contact mentionnée (11) si la carte a été introduite dans un appareil relié au système mentionné ou bien, ou l'un et l'autre à la fois, en ce qu'au moins certaines cartes SIM d'identification comportent plusieurs zones de contact qui servent à les relier à différents systèmes (8) ou bien, ou l'un et l'autre à la fois, en ce qu'au moins certaines cartes comportent en outre une bobine d'induction (12) grâce à laquelle les autres paramètres d'identification mentionnés sont accessibles ou bien, ou l'un et l'autre à la fois, en ce qu'au moins certains appareils mobiles possèdent une interface à infrarouge (140) servant à transmettre des paramètres d'identification à des systèmes extérieurs (81, 8).

13. Système de téléphonie mobile selon la revendication 9, **caractérisé en ce que** le grand nombre mentionné d'appareils mobiles (13, 14) est réalisé de telle façon qu'ils puissent communiquer avec le serveur SIM mentionné grâce à des messages SMS, et en ce que les paramètres d'identification enregistrés dans les messages SMS mentionnés sont accessibles pour la mise en mémoire dans les moyens de mise en mémoire (10) mentionnés.

14. Système de téléphonie mobile selon l'une des revendications 9 à 13, **caractérisé en ce que** les paramètres d'identification mentionnés comprennent des paramètres d'identification biométriques.

15. Procédé permettant d'identifier un abonné de téléphonie mobile dans d'autres systèmes, **caractérisé par** les opérations suivantes :
mise en mémoire de paramètres d'identification et de programmes de protocoles d'identification spécifiques du système dans un serveur (3, 7), paramètres permettant d'identifier l'abonné mentionné dans l'autre ou les autres systèmes mentionnés (8), au moins un autre système mentionné n'étant pas un réseau de téléphonie mobile et ces autres paramètres d'identification comprenant dans chaque cas des paramètres spécifiques de l'autre système considéré,
transmission des paramètres d'identification mentionnés et des programmes de protocoles d'identification spécifiques du système, du serveur mentionné aux cartes d'identification (1) des abonnés correspondants en passant par un réseau de téléphonie mobile (2), les cartes d'identification mentionnées (1) étant reliées à un appareil mobile (13, 14) par une zone de contact (11) et comportant des moyens électroniques de mise en mémoire (10) qui contiennent des paramètres d'identification d'abonnés dans le réseau de téléphonie mobile mentionné,
mise en mémoire des paramètres d'identification transmis mentionnés et des programmes de protocoles d'identification spécifiques du système dans les moyens de mise en mémoire mentionnés (10) des abonnés correspondants, et
utilisation des cartes d'identification mentionnées comme moyens d'identification dans les autres systèmes mentionnés, le programme de protocole d'identification spécifique du système introduisant au moins dans certains autres systèmes considérés les autres paramètres d'identification correspondants suivant un protocole d'identification spécifique du système.

16. Procédé selon la revendication précédente, **caractérisé en ce que** les paramètres d'identification transmis mentionnés sont codés.

17. Procédé selon la revendication 15, **caractérisé en ce qu'**on accède aux autres paramètres d'identification mentionnés grâce à la zone de contact mentionnée (11) ou bien, ou l'un et l'autre à la fois, en ce quon accède aux autres paramètres d'identification mentionnés grâce à une bobine d'induction (12) se trouvant sur les cartes d'identification mentionnées, ou bien, ou l'un et l'autre à la fois, en ce qu'on accède aux autres paramètres d'identification mentionnés grâce à une interface à infrarouge (140) qui se trouve dans les appareils mobiles (13, 14).
